# EUROPEAN PATENT SPECIFICATION

(11) **EP 2 296 314 B1**
(45) Date of publication and mention of the grant of the patent: **19.09.2012**
(21) Application number: 09797391.1
(22) Date of filing: 13.07.2009
(51) Int. Cl.: H04L 29/06, H04L 29/08, H04L 12/24

(54) **CONFIGURING APPLICATION METHOD, DEVICE AND SYSTEM**
KONFIGURIERENDES ANWENDEVERFAHREN, VORRICHTUNG UND SYSTEM
SYSTÈME, DISPOSITIF ET PROCÉDÉ D APPLICATION DE CONFIGURATION

(30) Priority: 18.07.2008 CN 200810141662
(43) Date of publication of application: 16.03.2011
(60) Divisional application: 12169569.6
(73) Proprietor: Huawei Technologies Co., Ltd., Longgang District, Shenzhen Guangdong 518129 (CN)
(72) Inventor: FANG, Ping, Shenzhen 518129 (CN); WU, Huangwei, Shenzhen 518129 (CN); ZHANG, Qinliang, Shenzhen 518129 (CN)
(74) Representative: Pfenning, Meinig & Partner GbR
(86) International application number: PCT/CN2009/072738
(87) International publication number: WO 2010/006544

(56) References cited:
- EP-A1- 2 007 069
- WO-A1-2008/052004
- CN-A- 1 905 452
- CN-A- 101 141 418
- CN-A- 101 202 745
- US-A1- 2008 040 716
- US-B1- 6 584 074
- "TR-069", ITU-T DRAFTS ; STUDY PERIOD 2009-2012, INTERNATIONAL TELECOMMUNICATION UNION, GENEVA ; CH, vol. Study Group 12, 30 December 2007 (2007-12-30), - 30 December 2007 (2007-12-30), pages 1-138, XP017439446, [retrieved on 2009-06-18]
- 3GPP2-DRAFTS, 2500 WILSON BOULEVARD, SUITE 300, ARLINGTON, VIRGINIA 22201 USA, 30 December 2007 (2007-12-30), - 30 December 2007 (2007-12-30), XP040265113,

## Description

### FIELD OF THE INVENTION

The present invention relates to the communication field, and in particular, to a broadband access technology.

### BACKGROUND OF THE INVENTION

The Digital Subscriber Line (DSL) is a broadband access technology, which is widely used in the broadband access for home use. Applications based on the broadband access technology such as Voice over Internet Protocol (VoIP) and Internet Protocol Television (IPTV) need various IP-based terminals. The IP application terminal for home use is named Customer Premises Equipment (CPE) in the DSL Forum. An Auto-Configuration Server (ACS) is responsible for the automatic configuration and management of the CPE, so that the CPE can work normally without user intervention. The ACS usually uses various Remote Procedure Call (RPC) methods to modify and set the parameters of the CPE.

The TR-069 standard of the DSL Forum defines the ACS-based automatic configuration and management process of the CPE (broadband network terminal, for example, a gateway) directly connected to a Digital Subscriber Line Access Multiplexer (DSLAM). The TR-111 standard defines the ACS-based automatic configuration and management process of the CPE located on a Local Area Network (LAN) (LAN device, for example, an IPTV terminal) through a gateway.

The configuration commands sent by the ACS typically include: commands for modifying the parameters of the CPE, commands for adding parameters or object instances in the CPE, or commands for deleting the parameters or object instances in the CPE. When the CPE needs to apply the configuration after receiving and executing the configuration commands, two cases may occur: one is that the parameters or object instances can be applied immediately after the configuration commands are executed; the other is that the parameters or object instances can be applied only if the CPE meets a certain condition after the configuration commands are executed, for example, if the CPE needs to be reset and restarted or the current services need to be restarted, the parameters or object instances can be applied only after the CPE is reset and restarted or after the current services are restarted.

The TR-069 standard defines the RPC methods such as SetParameterValue, AddObject, and DeleteObject. When the ACS adopts the RPC methods to configure the parameters or objects in the CPE, the CPE may need to be restarted to apply the configuration. According to the current standard, the proper time for sending configuration commands, so that the CPE is restarted to apply the configuration and the impact of the device restart on services running on the CPE due to the configuration application is minimized, is not determined by the CPE itself, but by the ACS.

In practice, the ACS may manage multiple CPEs. As a result, it is difficult for the ACS to monitor the service running of the CPE in real time to select the optimal time for sending commands. That is, the mechanism currently defined in the TR-069 standard can not ensure that the impact of the device restart on services due to the configuration application is minimized.

"3^{RD} GENERATION PARTNERSHIP PROJECT 2 TITLE: Action Time Field for BSPM" suggests the inclusion of action time field associated with each Broadcast/Multicast (BC/MC) Session in the Broadcast Service Parameter Message (BSPM).

### SUMMARY OF THE INVENTION

Embodiments of the present invention provide a method, a device, and a system for applying configuration to reduce the impact of the device restart on services due to the configuration application.

According to a first aspect of the present invention, a method for applying configuration includes:
receiving configuration commands sent by an ACS;
performing configuration according to the configuration commands; and
applying the configuration according to a configuration application policy
wherein the configuration application policy comprises at least one time window, and the time window specifically comprises a WindowStart, a WindowEnd and a WindowMode.

According to a second aspect of the present invention, a device includes:
a receiving unit, configured to receive configuration commands sent by an ACS;
a configuring unit, configured to perform configuration according to the configuration commands; and
an applying unit, configured to apply the configuration according to a configuration application policy,
wherein the configuration application policy comprises at least one time window, and the time window specifically comprises a WindowStart, a WindowEnd and a WindowMode.

According to a third aspect of the present invention, a system includes:
an ACS, configured to send configuration commands; and
a CPE, configured to: receive the configuration commands sent by the ACS, perform configuration according to the configuration commands, and apply the configuration according to a configuration application policy,
wherein the configuration application policy comprises at least one time window, and the time window specifically comprises a WindowStart, a WindowEnd and a WindowMode.

According to the embodiments of the present invention, the impact of the device restart on services due to the configuration application is reduced by adding a configuration application policy

### BRIEF DESCRIPTION OF THE DRAWINGS

FIG. 1 is a flowchart of a method for applying configuration according to an embodiment of the present invention;
FIG. 2 is a flowchart of a device for applying configuration according to an embodiment of the present invention;
FIG. 3 is a flowchart of a system for applying configuration according to an embodiment of the present invention;
FIG. 4 is a flowchart of a method for applying configuration according to another embodiment of the present invention;
FIG. 5 illustrates a device for applying configuration according to another embodiment of the present invention; and
FIG. 6 illustrates a system for applying configuration according to another embodiment of the present invention.

### DETAILED DESCRIPTION OF THE EMBODIMENTS

The configuration described in the present invention may be: modifying parameters, adding parameters, deleting parameters, adding object instances, or deleting object instances.

### Embodiment 1

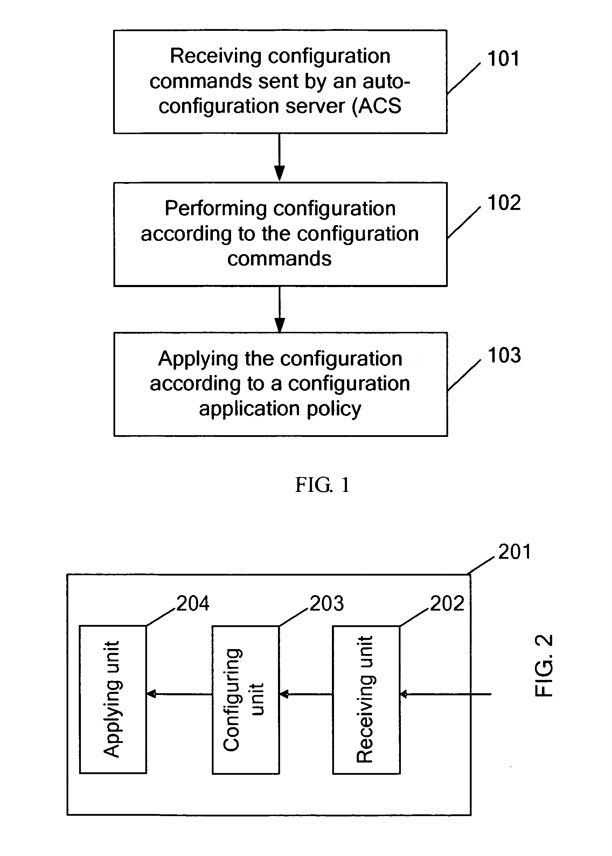

An embodiment of the present invention provides a method for applying configuration. As shown in FIG. 1, the method includes:
101: Receiving configuration commands from an ACS;
102: Performing configuration according to the configuration commands; and
103: Applying the configuration according to a configuration application policy.

An embodiment of the present invention provides a device 201 for applying configuration. As shown in FIG. 2, the device 201 for applying configuration includes:
a receiving unit 202, configured to receive configuration commands sent by an ACS;
a configuring unit 203, configured to perform configuration according to the configuration commands; and
an applying unit 204, configured to apply the configuration according to a configuration application policy.

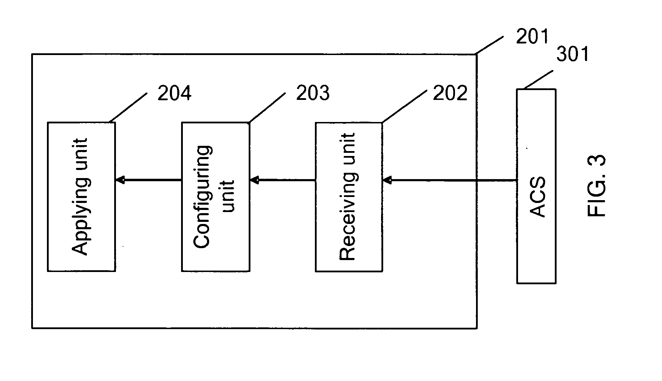

An embodiment of the present invention provides a system for applying configuration. As shown in FIG. 3, the system for applying configuration includes:
an ACS 301, configured to send configuration commands; and
a CPE 201, including: a receiving unit 202, configured to receive the configuration commands sent by the ACS; a configuring unit 203, configured to perform configuration according to the configuration commands; an applying unit 204, configured to apply the configuration according to a configuration application policy.

### Embodiment 2

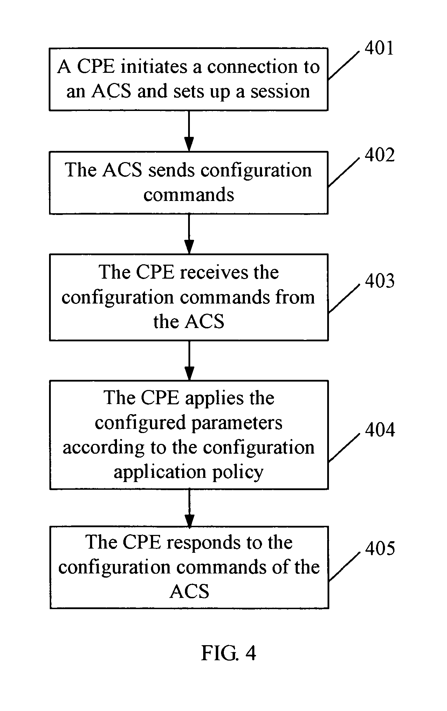

An embodiment of the present invention provides a method for applying configuration. As shown in FIG. 4, the method for applying configuration includes the following steps:
401: A CPE initiates a connection to an ACS and sets up a session.
402: The ACS sends configuration commands.
403: The CPE receives the configuration commands sent by the ACS.
404: The CPE applies the configured parameters according to the configuration application policy.
405: The CPE responds to the configuration commands of the ACS.

The configuration application policy includes TimeWindows. The TimeWindows specifies the number of time windows, the length of the time window, and a specific point of time for applying the configuration in the time window (that is the application mode of the time window) according to the urgency degree of the configuration to be applied.

The configuration application policy may further include a policy application scope corresponding to the policy. The application scope covers at least one of the following:
applying configuration in a single RPC;
applying all configurations in a single session;
applying all unapplied configurations in a CPE; and
applying configuration generated by the ACS.

The configuration application policy may further include a parameter used to control whether to enable the configuration application policy. When the parameter indicates that the policy is to be enabled, the CPE applies the configured parameter according to the configuration application policy. When the parameter indicates that the policy is not to be enabled, the CPE immediately applies the configured parameter or applies the configured parameter after being reset and restarted or after restarting the current service.

The configuration application policy is defined in the CPE beforehand. The following table describes the definition of the configuration application policy.

**Table 1**

| **Name** | **Type** | **Writable (W)** | **Readable (R)** | **Description** |
|---|---|---|---|---|
| Internet-Gateway-Device.ApplyPolicy. {i} | Object | - | R | This object includes the application policy for the modification result of the CPE parameters. |
| TimeWindows | TimeWin dowStruct[0..] | | R | The structure defines the time window for the CPE to modify parameters and apply modified parameters. Applying a new parameter may cause restart or interruption of other services. If no time window is defined, the services may be interrupted to apply new parameters at any time in the next 24 hours (default time window). The CPE supports a structure of at least one time window. It is optional that multiple time windows are supported. |
| | | | | When the time window includes no element, the structure of the default time window is: the start time of the time window is 0; the end time of the time window is 3600; and the mode of the time window is "2 Immediately". When the UserMessage is empty, it indicates immediate execution. In this case, however, the CPE may continue the session with the ACS. The time windows in the time window structure need to be put according to the time sequence without overlapping. In addition, the following requirements need to be satisfied: |
| | | | | TimeWindows[i].WindowStart ≥ 0 and |
| | | | | TimeWindows[i].WindowEnd ≥ |
| | | | | TimeWindows[i].WindowStart |
| | | | | and |
| | | | | TimeWindows[j].WindowEnd < TimeWindows[j+1].WindowStart |
| | | | | i is the defined sequence number of the time window; and |
| | | | | j is the defined sequence number of the time window, but not the last one. |
| | | | | Table 2 shows the detailed definition of the time window. |
| ApplyMode | string(64) | W | R | It defines to which parameter modification command the application policy is directed: |
| | | | | 0 Single RPC: applicable to parameter modification in a single RPC; |
| | | | | 1 Single Session: applicable to all parameter modifications in a single session; |
| | | | | 2 All Unapplied Values: applicable to all the unapplied parameter modifications in the CPE; |
| | | | | 3 Single ACS: applicable to all the parameter modifications caused by the ACS. |
| Status | int[0:1] | w | R | It indicates the status of the application policy. |
| | | | | 1: indicates that the policy is in the activated state and the parameter modifications need to be applied according to this policy; |
| | | | | 0: indicates that the policy is in the deactivated state and the parameter modifications need to be applied according to the default rule in the system. |

The following table shows the definition of the time window in the configuration application policy.

**Table 2**

| **Name** | **Type** | **Description** |
|---|---|---|
| WindowStart | unsignedInt | It indicates the start time of the time window and refers to the time when the RPC commands are received, measured in seconds. This parameter and the WindowEnd parameter together define the time window information. The value 0 indicates that the time window starts immediately. |
| WindowEnd | unsignedInt | It indicates the end time of the time window. The modified parameter may be applied in this time window. |
| WindowMode | string(64) | It indicates the application mode of the time window after an integer. |
| | | 1 At Any Time: Any time of the time window, even though this application causes service interruption; |
| | | 2 Immediately: Start immediately from the start time of the time window even though this application causes service interruption; |
| | | 3 When Idle: CPE idle time in the time window, not allowing service interruption; |
| | | 4 Confirmation Needed: Apply the modification only after confirmation is given; |
| | | The time window defines the time range of the parameter modification that needs to be applied by the CPE. The CPE needs to select the appropriate time in the time window to apply the modification of the parameters. |
| | | The CPE must support at least the two application modes: "1 At Any Time" and "2 Immediately". Other application modes are optional. |
| UserMessage | string(256) | This option is optional. With this option, the CPE user may be prompted to apply the modification and back up important data. |

After step 401 and before step 402, the method further includes the following step:
The ACS sends the configuration application policy to the CPE; the CPE receives the configuration application policy, and determines the configuration application policy according to the configuration application policy sent by the ACS.

In practice, the ACS invokes commands and sends a configuration application policy firstly according to the importance and urgency degree of the configuration. When the configuration application policy is not defined in the initial CPE data model, the configuration may be applied according to the current TR-069 mechanism. The ACS needs to formulate and modify the configuration application policy in the CPE according to the importance and urgency degree of the commands before the configuration commands are sent, without querying for the service running in the CPE in real time. The CPE itself determines the time for applying the configuration according to the configuration application policy and the service running in the CPE, which ensures that the ACS load is reduced and that the impact of the configuration application on the CPE is minimized.

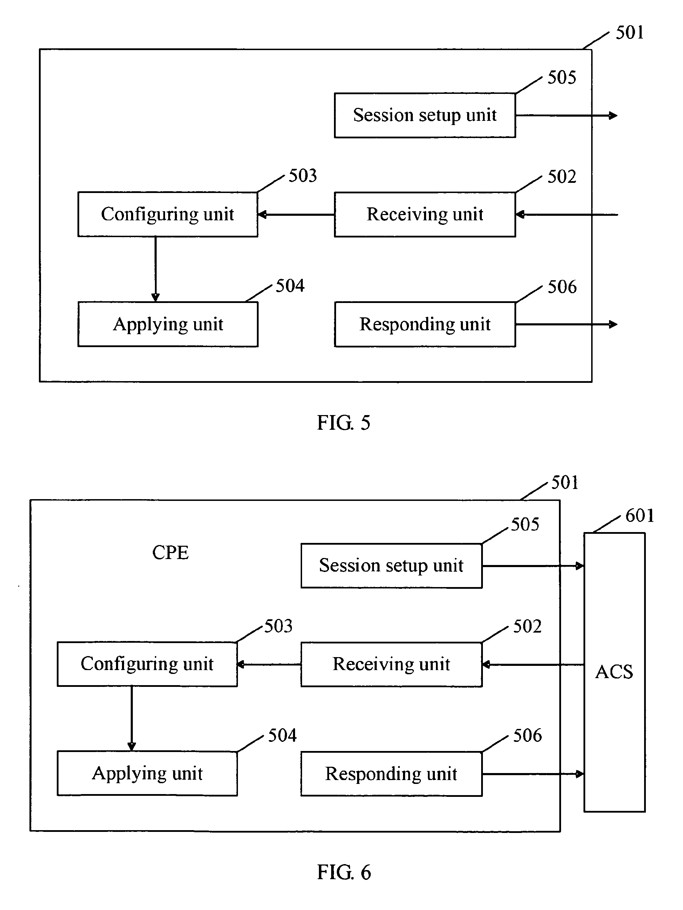

An embodiment of the present invention provides a device 501 for applying configuration. As shown in FIG. 5, the device for applying configuration includes:
a receiving unit 502, configured to receive configuration commands sent by an ACS;
a configuring unit 503, configured to perform configuration according to the configuration commands; and
an applying unit 504, configured to apply the configuration according to a configuration application policy.

The device 501 may further include:
a session setup unit 505, configured to initiate a connection to the ACS and set up a session.

The device 501 may further include:
a responding unit 506, configured to respond to the configuration commands sent by the ACS.

An embodiment of the present invention provides a system for applying configuration. As shown in FIG. 6, the system for applying configuration includes:
an ACS 601, configured to send configuration commands; and
a CPE 501, including: a receiving unit 502, configured to receive configuration commands sent by the ACS; a configuring unit 503, configured to perform configuration according to the configuration commands; and an applying unit 504, configured to apply the configuration according to a configuration application policy.

The CPE further includes: a session setup unit 505, configured to initiate a connection to the ACS and set up a session.

The CPE further includes: a responding unit 506, configured to respond to the configuration commands sent by the ACS.

The above descriptions are merely some exemplary embodiments of the present invention.

## Claims

1. A method for applying configuration, comprising:
receiving (101) configuration commands sent by an Auto-Configuration Server, ACS;
performing (102) configuration according to the configuration commands; and
applying (103) the configuration according to a configuration application policy, **characterized in that** the configuration application policy comprises at least one time window, and the time window specifically comprises a WindowStart, indicating a start time of the time window, a WindowEnd, indicating an end time of the time window and a WindowMode, indicating an application mode of the time window.

2. The method according to claim 1, wherein the configuration application policy further comprises an application scope of the configuration application policy, wherein the application scope covers at least one of:
applying configuration in a single Remote Procedure Call, RPC;
applying all configurations in a single session;
applying all unapplied configurations in a Customer Premises Equipment, CPE; and
applying configuration generated by the ACS.

3. The method according to claim 1 or 2, wherein: the configuration application policy further comprises a parameter used to control whether to enable the configuration application policy; when the parameter indicates that the configuration application policy is to be enabled, the configuration is applied according to the configuration application policy; when the parameter indicates that the configuration application policy is not to be enabled, the configuration is applied immediately or the configuration is applied after resetting and restarting are completed or after a current service is restarted.

4. The method according to claim 1, wherein the configuration application policy is determined according to the received configuration application policy sent by the ACS; and before receiving the configuration commands sent by the ACS, the method further comprises:
receiving the configuration application policy sent by the ACS.

5. The method according to claim 1, wherein after applying the configuration according to the configuration application policy, the method further comprises: responding to the configuration commands sent by the ACS.

6. A device (201, 501), comprising:
a receiving unit (202, 502), configured to receive configuration commands sent by an Auto-Configuration Server, ACS (301, 601);
a configuring unit (203, 503), configured to perform configuration according to the configuration commands; and
an applying unit (204, 504), configured to apply the configuration according to a configuration application policy,
**characterized in that** the configuration application policy comprises at least one time window, and the time window specifically comprises a WindowStart **characterized in that**, a WindowEnd, indicating a start time of the time window and a WindowMode, indicating an application mode of the time window.

7. The device (201, 501) according to claim 6, further comprising:
a responding unit (506), configured to respond to the configuration commands sent by the ACS (301,601).

8. A system, comprising:
an Auto-Configuration Server, ACS (301, 601), configured to send configuration commands; and
a Customer Premises Equipment, CPE (201, 501), configured to: receive the configuration commands sent by the ACS (301, 601), perform configuration according to the configuration commands, and apply the configuration according to a configuration application policy, **characterized in that** the configuration application policy comprises at least one time window, and the time window specifically comprises a WindowStart, indicating a start time of the time window, a WindowEnd, indicating an end time of the time window, and a WindowMode, indicating an application mode of the time window.

9. The system according to claim 8, wherein the CPE (201) comprises:
a responding unit (506), configured to respond to the configuration commands sent by the ACS (301, 601).

10. The system according to claim 8, wherein:
the configuration application policy is determined by the CPE (201, 501) according to the received configuration application policy sent by the ACS (301, 601); and
the ACS (301, 601) is further configured to send the configuration application policy to the CPE (201, 501).

## Patentansprüche

1. Verfahren zum Anwenden einer Konfiguration, wobei das Verfahren Folgendes umfasst:
Empfangen (101) von Konfigurationsbefehlen, die durch einen Autokonfigurationsserver ACS gesendet werden;
Ausführen (102) einer Konfiguration in Übereinstimmung mit den Konfigurationsbefehlen; und
Anwenden (103) der Konfiguration in Übereinstimmung mit einer Konfigurationsanwendungsstrategie, **dadurch gekennzeichnet, dass**
die Konfigurationsanwendungsstrategie wenigstens ein Zeitfenster umfasst und das Zeitfenster spezifisch ein WindowStart, das eine Anfangszeit des Zeitfensters angibt, ein WindowEnd, das eine Endzeit des Zeitfenster angibt, und ein WindowMode, das eine Anwendungsbetriebsart des Zeitfensters angibt, umfasst.

2. Verfahren nach Anspruch 1, wobei die Konfigurationsanwendungsstrategie ferner einen Anwendungsumfang der Konfigurationsanwendungsstrategie umfasst, wobei der Anwendungsumfang wenigstens eines der Folgenden umfasst:
Anwenden einer Konfiguration in einem einzelnen Prozedurfernaufruf RPC;
Anwenden aller Konfigurationen in einer einzelnen Sitzung;
Anwenden aller nicht angewendeten Konfigurationen in einem Teilnehmerendgerät CPE; und
Anwenden einer durch den ACS erzeugten Konfiguration.

3. Verfahren nach Anspruch 1 oder 2, wobei: die Konfigurationsanwendungsstrategie ferner einen Parameter umfasst, der dazu verwendet wird, zu steuern, ob die Konfigurationsanwendungsstrategie freigegeben werden soll; wobei die Konfiguration in Übereinstimmung mit der Konfigurationsanwendungsstrategie angewendet wird, wenn der Parameter angibt, dass die Konfigurationsanwendungsstrategie freigegeben werden soll; wobei die Konfiguration sofort angewendet wird oder die Konfiguration angewendet wird, nachdem Zurücksetzen und Neustarten abgeschlossen sind oder nachdem ein gegenwärtiger Dienst neu gestartet worden ist, wenn der Parameter angibt, dass die Konfigurationsanwendungsstrategie nicht freigegeben werden soll.

4. Verfahren nach Anspruch 1, wobei die Konfigurationsanwendungsstrategie in Übereinstimmung mit der durch den ACS gesendeten empfangenen Konfigurationsanwendungsstrategie; und vor Empfangen der durch den ACS gesendeten Konfigurationsbefehle bestimmt wird, wobei das Verfahren ferner Folgendes umfasst:
Empfangen der durch den ACS gesendeten Konfigurationsanwendungsstrategie.

5. Verfahren nach Anspruch 1, wobei das Verfahren nach Anwenden der Konfiguration in Übereinstimmung mit der Konfigurationsanwendungsstrategie ferner Folgendes umfasst:
Antworten auf die durch den ACS gesendeten Konfigurationsbefehle.

6. Vorrichtung (201, 501), die Folgendes umfasst:
eine Empfangseinheit (202, 502), die zum Empfangen von durch einen Autokonfigurationsserver ACS (301, 601) gesendeten Konfigurationsbefehlen konfiguriert ist;
eine Konfigurationseinheit (203, 503), die zum Ausführen einer Konfiguration in Übereinstimmung mit den Konfigurationsbefehlen konfiguriert ist; und
eine Anwendungseinheit (204, 504), die zum Anwenden der Konfiguration in Übereinstinimung mit einer Konfigurationsanwendungsstrategie konfiguriert ist,
**dadurch gekennzeichnet, dass** die Konfigurationsanwendungsstrategie wenigstens ein Zeitfenster umfasst und das Zeitfenster spezifisch ein WindowStart, das eine Anfangszeit des Zeitfensters angibt, ein WindowEnd, das eine Endzeit des Zeitfensters angibt, und ein WindowMode, das eine Anwendungsbetriebsart des Zeitfensters angibt, umfasst.

7. Vorrichtung (201, 501) nach Anspruch 6, die ferner Folgendes umfasst:
eine Antworteinheit (506), die zum Antworten auf die durch den ACS (301, 601) gesendeten Konfigurationsbefehle konfiguriert ist.

8. System, das Folgendes umfasst:
einen Autokonfigurationsserver ACS (301, 601), der zum Senden von Konfigurationsbefehlen konfiguriert ist; und
ein Teilnehmerendgerät CPE (201, 501), das konfiguriert ist zum: Empfangen der durch den ACS (301, 601) gesendeten Konfigurationsbefehle, zum Ausführen einer Konfiguration in Übereinstimmung mit den Konfigurationsbefehlen und zum Anwenden der Konfiguration in Übereinstimmung mit einer Konfigurationsanwendungsstrategie, **dadurch gekennzeichnet, dass** die Konfigurationsanwendungsstrategie wenigstens ein Zeitfenster umfasst und das Zeitfenster speziell ein WindowStart, das eine Anfangszeit des Zeitfensters angibt,
ein WindowEnd, das eine Endzeit des Zeitfensters angibt, und ein WindowMode, das eine Anwendungsbetriebsart des Zeitfensters angibt, umfasst.

9. System nach Anspruch 8, wobei das CPE (201) Folgendes umfasst:
eine Antworteinheit (506), die zum Antworten auf die durch den ACS (301, 601) gesendeten Konfigurationsbefehle konfiguriert ist.

10. System nach Anspruch 8, wobei:
die Konfigurationsanwendungsstrategie durch das CPE (201, 501) in Übereinstimmung mit der durch den ACS (301, 601) gesendeten empfangenen Konfigurationsanwendungsstrategie bestimmt wird; und
der ACS (301, 601) ferner zum Senden der Konfigurationsanwendungsstrategie an das CPE (201, 501) konfiguriert ist.

## Revendications

1. Procédé d'application de configuration, comprenant :
la réception (101) de commandes de configuration envoyées par un Serveur d'Auto-Configuration, ACS ;
l'exécution (102) d'une configuration en fonction des commandes de configuration ; et
l'application (103) de la configuration en fonction d'une règle d'application de configuration, **caractérisé en ce que**
la règle d'application de configuration comprend au moins une fenêtre temporelle, et
la fenêtre temporelle comprend spécifiquement un WindowStart, indiquant un temps de début de la fenêtre temporelle, un WindowEnd, indiquant un temps de fin de la fenêtre temporelle, et un WindowMode, indiquant un mode d'application de la fenêtre temporelle.

2. Procédé selon la revendication 1, dans lequel la règle d'application de configuration comprend en outre une étendue d'application de la règle d'application de configuration, l'étendue d'application couvrant au moins l'une de :
l'application d'une configuration dans un Appel de Procédure Distant, RPC, unique ;
l'application de toutes les configurations dans une session unique ;
l'application de toutes les configurations non appliquées dans un Equipement d'Abonné, CPE ; et
l'application de la configuration générée par l'ACS.

3. Procédé selon la revendication 1 ou 2, dans lequel : la règle d'application de configuration comprend en outre un paramètre utilisé pour commander s'il convient ou non de valider la règle d'application de configuration ; quand le paramètre indique que la règle d'application de configuration doit être validée, la configuration est appliquée en fonction de la règle d'application de configuration ; quand le paramètre indique que la règle d'application de configuration ne doit pas être validée, la configuration est appliquée immédiatement ou la configuration est appliquée après une remise à zéro et un redémarrage ou après la reprise d'un service en cours.

4. Procédé selon la revendication 1, dans lequel la règle d'application de configuration est déterminée en fonction de la règle d'application de configuration reçue envoyée par l'ACS ; et avant de recevoir les commandes de configuration envoyées par l'ACS, le procédé comprend en outre :
la réception de la règle d'application de configuration envoyée par l'ACS.

5. Procédé selon la revendication 1, comprenant en outre après l'application de la configuration en fonction de la règle d'application de configuration :
la réponse aux commandes de configuration envoyées par l'ACS.

6. Dispositif (201, 501), comprenant :
une unité de réception (202, 502), configurée pour recevoir des commandes de configuration envoyées par un Serveur d'Auto-Configuration, ACS (301, 601) ;
une unité de configuration (203, 503), configurée pour exécuter la configuration en fonction des commandes de configuration ; et
une unité d'application (204, 504), configurée pour appliquer la configuration en fonction d'une règle d'application de configuration,
**caractérisé en ce que** la règle d'application de configuration comprend au moins une fenêtre temporelle, et la fenêtre temporelle comprend spécifiquement un WindowStart, indiquant un temps de début de la fenêtre temporelle, un WindowEnd, indiquant un temps de fin de la fenêtre temporelle, et un WindowMode, indiquant un mode d'application de la fenêtre temporelle.

7. Dispositif (201, 501) selon la revendication 6, comprenant en outre :
une unité de réponse (506), configurée pour répondre aux commandes de configuration envoyées par l'ACS (301, 601).

8. Système, comprenant :
un Serveur d'Auto-Configuration, ACS (301, 601), configuré pour envoyer des commandes de configuration, et
un Equipement d'Abonné, CPE (201, 501), configuré pour : recevoir les commandes de configuration envoyées par l'ACS (301, 601), exécuter la configuration en fonction des commandes de configuration, et appliquer la configuration en fonction d'une règle d'application de configuration, **caractérisé en ce que** la règle d'application de configuration comprend au moins une fenêtre temporelle, et la fenêtre temporelle comprend spécifiquement un WindowStart, indiquant un temps de début de la fenêtre temporelle, un WindowEnd, indiquant un temps de fin de la fenêtre temporelle, et un WindowMode, indiquant un mode d'application de la fenêtre temporelle.

9. Système selon la revendication 8, dans lequel le CPE (201) comprend :
une unité de réponse (506), configurée pour répondre aux commandes de configuration envoyées par l'ACS (301, 601).

10. Système selon la revendication 8, dans lequel :
la règle d'application de configuration est déterminée par le CPE (201, 501) en fonction de la règle d'application de configuration reçue envoyée par l'ACS (301, 601) ; et
l'ACS (301, 601) est configuré en outre pour envoyer la règle d'application de configuration au CPE (201, 501).
